(19) Europäisches Patentamt
European Patent Office
Office européen des brevets

(11) Veröffentlichungsnummer: **0 007 094**
**B1**

(12) **EUROPÄISCHE PATENTSCHRIFT**

(45) Veröffentlichungstag der Patentschrift: **20.10.82**

(51) Int. Cl.³: **C 08 F 10/00**, C 08 F 4/64

(21) Anmeldenummer: **79102378.1**

(22) Anmeldetag: **11.07.79**

# (54) Verfahren zum Herstellen einer Titan-Komponente für Polymerisationskatalysatoren des Ziegler-Natta-Typs.

(30) Priorität: **14.07.78 DE 2830929**

(43) Veröffentlichungstag der Anmeldung: **23.01.80 Patentblatt 80/2**

(45) Bekanntmachung des Hinweises auf die Patenterteilung: **20.10.82 Patentblatt 82/42**

(84) Benannte Vertragsstaaten: **AT BE DE FR GB IT**

(56) Entgegenhaltungen:
**FR-A-1 425 600**
**FR-A-2 016 081**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Staiger, Gerhard, Dr. Chem., Virchowstrasse 26, D-6712 Bobenheim-Roxheim (DE)**

**EP 0 007 094 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Verfahren zum Herstellen einer Titan-Komponente für Polymerisationskatalysatoren des Ziegler-Natta-Tips

Titan-Komponenten für Polymerisationskatalysatoren des Ziegler-Natta-Typs sind in einer Vielzahl von Varianten bekannt, insbesondere solchen, bei denen die Titan-Komponente von besonderer chemischer und/oder chemisch-physikalischer Art ist.

Die Modifikationen in der Art der Titan-Komponente werden vorgenommen, um bestimmte Ziele zu erreichen, z. B. die folgenden:

(a) Katalysatoren, die bei der Polymerisation von α-Monoolefinen, wie insbesondere Propylen, zu Polymerisaten mit einem relativ hohen Anteil an stereoregulärem (= isotaktischem) Polymerisat führen.

(b) Katalysatoren, die eine erhöhte Ausbeute an Polymerisat zu liefern vermögen, nämlich Katalysatoren mit einer erhöhten Produktivität, d. h. Katalysatoren, bei denen die Menge an gebildetem Polymerisat pro Gewichtseinheit der Titan-Komponente erhöht ist.

(c) Katalysatoren, durch die weniger bzw. kein Halogen in das Polymerisat eingebracht wird – was zu erreichen ist, indem die Ausbeute gemäss (b) gesteigert wird und/oder eine Titan-Komponente eingesetzt wird, die möglichst wenig bzw. kein Halogen erhält.

(d) Katalysatoren, die ihre positiven Wirkungen auch bei relativ niederen Temperaturen entfalten – was z. B. für die Trockenphasenpolymerisation von Bedeutung sein kann.

(e) Katalysatoren, durch welche die morphologischen Eigenschaften der Polymerisate in bestimmter Weise beeinflusst werden, etwa im Sinne einer einheitlichen Korngrösse und/oder eines hohen Schüttgewichtes – was z. B. für die technische Beherrschung der Polymerisationssysteme, die Aufarbeitung der Polymerisate und/oder die Verarbeitbarkeit der Polymerisate von Bedeutung sein kann.

(f) Katalysatoren, die einfach und sicher herzustellen und gut handzuhaben sind – z. B. solche, die sich in (inerten) Kohlenwasserstoff-Hilfsmedien zubereiten lassen.

(g) Katalysatoren, die es ermöglichen, bei der Polymerisation unter Einwirkung eines Molekulargewichtsreglers, wie insbesondere Wasserstoff, mit relativ geringen Mengen an Regler auszukommen – was z. B. für die Thermodynamik der Verfahrensführung von Bedeutung sein kann.

(h) Katalysatoren, die auf spezielle Polymerisationsverfahren zugeschnitten sind – etwa solche, die z. B. entweder auf die spezifischen Besonderheiten der Suspensionspolymerisation oder auf die spezifischen Besonderheiten der Trockenphasenpolymerisation abgestimmt sind.

(i) Katalysatoren, die zu Polymerisaten führen, deren Eigenschaftsspektrum sie für das eine oder das andere Anwendungsgebiet besonders geeignet macht.

Nach den bisherigen Erfahrungen gibt es unter den mannigfachen Zielen etliche Ziele, die man durch Modifikationen in der Art der Titan-Komponente nur dann erreichen kann, wenn man andere Ziele zurücksetzt.

Unter diesen Gegebenheiten ist man im allgemeinen bestrebt, solche Modifikationen zu finden, mit denen man nicht nur die gesteckten Ziele erreicht, sondern auch andere erwünschte Ziele möglichst wenig zurücksetzen muss.

In diesem Rahmen liegt die Aufgabenstellung der vorliegenden Erfindung: Eine neue Art von Titan-Komponente aufzuzeigen, mit der man gegenüber bekannten Titan-Komponenten – unter vergleichbarer Zielsetzung – bessere Ergebnisse erreichen kann.

Es wurde gefunden, dass die gestellte Aufgabe gelöst werden kann mit einer Titan-Komponente, die ein in besonderer Weise – insbesondere auch unter besonderen thermischen Bedingungen – erhaltenes Produkt aus einem bestimmten Magnesiumalkoholat, einem bestimmten Chlortoluol und Titantetrachlorid ist.

Gegenstand der vorliegenden Erfindung ist dementsprechend ein Verfahren zum Herstellen einer Titan-Komponente für Polymerisationskatalysatoren des Ziegler-Natta-Typs, mit den kennzeichnenden Merkmalen, dass man zunächst

(1) in einer ersten Stufe

(1.1) 100 Gewichtsteile eines Alkoholats der allgemeinen Formel $Mg(OR)_2$, worin R steht für eine 1 bis 6, vorzugsweise 2 bis 4 Kohlenstoffatome aufweisende Alkylgruppe; mit

(1.2) soviel Gewichtsteilen eines Chlortoluols der Formel

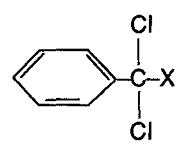
,

worin X steht für Chlor oder Wasserstoff, vorzugsweise Chlor, wie sie einem Molverhältnis Alkoholat (1.1):Chlor in dem Chlortoluol (1.2) von 100:1 bis 100:100, vorzugsweise 100:3 bis 100:30 entsprechen;

in einer Kugelschwingmühle unter einer Mahlbeschleunigung von 30 bis 80, vorzugsweise 45 bis 55 $m \times sec^{-2}$ über eine Zeitspanne von 5 bis 100, vorzugsweise 10 bis 60 Stunden bei einer Temperatur von –50 bis +10, vorzugsweise –30 bis –5 °C in Abwesenheit von Verdünnungsmitteln miteinander vermahlt; dann

(2) in einer zweiten Stufe

(2.1) 100 Gewichtsteile des aus Stufe (1) resultierenden Stoffes mit

(2.2) 300 bis 1800, vorzugsweise 500 bis 1000 Gewichtsteilen Titantetrachlorid

zusammenbringt, das Ganze unter ständiger Durchmischung 0,1 bis 5, vorzugsweise 0,5 bis 2 Stunden auf einer Temperatur im Bereich von 40 bis 180, vorzugsweise 70 bis 90 °C hält und den dabei resultierenden Feststoff unter Abtrennung

überschüssigen Titantetrachlorids isoliert, und schliesslich

(3) in einer dritten Stufe

(3.1) 100 Gewichtsteile des aus Stufe (2) resultierenden Feststoffes erneut mit

(3.2) 300 bis 1800, vorzugsweise 500 bis 1000 Gewichtsteilen Titantetrachlorid

zusammenbringt, das Ganze unter ständiger Durchmischung 0,1 bis 5, vorzugsweise 0,5 bis 2 Stunden auf einer Temperatur im Bereich von 40 bis 180, vorzugsweise 120 bis 140 °C hält und den dabei resultierenden Feststoff unter Abtrennung überschüssigen Titantetrachlorids isoliert.

Zur stofflichen Seite des neuen Verfahrens ist das folgende zu sagen:

Magnesiumalkoholate (1.1) der im Rahmen der Erfindung in Betracht kommenden Art sind wohlbekannt, so dass auf sie nicht näher eingegangen zu werden braucht. Zu erwähnen ist allenfalls, dass die besonders gut geeigneten Alkoholate sich ableiten vom Äthyl-, n-Propyl-, i-Propyl-, n-Butyl-, sec.-Butyl- und tert.-Butylalkohol.

Auch die Chlortoluole (1.2) der in Betracht kommenden Art gehören als solche zum wohlbekannten Stand der Technik, womit auf sie ebenfalls nicht näher eingegangen zu werden braucht.

Das zu verwendende Titantetrachlorid (2.2) bzw. (3.2) sollte zweckmässigerweise von der Art sein, die üblicherweise für Polymerisationskatalysatoren eingesetzt wird.

Die Durchführung des erfindungsgemässen Verfahrens ist einfach und für den Fachmann ohne Erläuterungen möglich. Lediglich zu den Stufen (2) und (3) ist zu erwähnen, dass die Isolierung des jeweils resultierenden Feststoffs zweckmässigerweise durch Absaugen und die Abtrennung überschüssigen Titantetrachlorids zweckmässigerweise durch Waschen mit einem flüssigen Kohlenwasserstoff – bis dieser kein Titantetrachlorid mehr aufnimmt – erfolgt. Der hierbei in Betracht kommende flüssige Kohlenwasserstoff kann ein Kohlenwasserstoff der Art sein, die üblicherweise mit Titan-Komponenten für Katalysatoren des Ziegler-Natta-Typs ohne Schaden für den Katalysator bzw. dessen Titan-Komponente zusammengebracht wird; – z.B. bei der Polymerisation von Monoolefinen. Als Beispiel für geeignete Kohlenwasserstoffe seien genannt: Pentane, Hexane, Benzine und Cyclohexan.

Die nach dem erfindungsgemässen Verfahren hergestellten Titan-Komponenten für Polymerisationskatalysatoren des Ziegler-Natta-Typs lassen sich bei der Polymerisation von α-Olefinen in einschlägig üblicher Weise einsetzen, d.h. man wird diese Titan-Komponenten im allgemeinen zusammen mit einem metallorganischen Aktivator verwenden, insbesondere mit Aluminiumalkylverbindungen der Formel $Al(Alkyl)_3$ bzw. $ClAl(Alkyl)_2$, die 1 bis 8 Kohlenstoffatome per Alkylrest aufweisen, und vor allem mit Triäthylaluminium bzw. Diäthylaluminiumchlorid.

Wie sich gezeigt hat, ist es in vielen Fällen von Vorteil, die neuen Titan-Komponenten bei der Polymerisation nicht nur zusammen mit Aktivatoren der vorerwähnten Art zu verwenden, sondern auch zusätzlich mit einschlägig üblichen Promotoren. Dabei haben sich im gegebenen Zusammenhang besonders bewährt die Ester von $C_1$- bis $C_4$-Alkanolen mit p-Alkyl- oder – vorzugsweise – p-Alkoxy-benzoesäuren mit $C_1$- bis $C_4$-Alkyl- bzw. Alkoxygruppen – wofür ein typisches Beispiel der Anissäureäthylester ist.

Die nach dem erfindungsgemässen Verfahren hergestellten Titan-Komponenten liefern besonders gute Ergebnisse bei der Trockenpolymerisation von α-Olefinen, d.h. der Polymerisation in Abwesenheit flüssiger Hilfsmedien; aber auch die Polymerisation in Anwesenheit flüssiger Hilfsmedien ist mit gutem Erfolg möglich. Das Molekulargewicht lässt sich durch die üblichen Regler, insbesondere Wasserstoff, einstellen. Besonders geeignete zu polymerisierende α-Olefine sind solche mit 2 bis 6 Kohlenstoffatomen, insbesondere Propylen, Buten-1 und 4-Methyl-penten-1, sowie – zur Copolymerisation – Äthylen.

Beispiel 1

A) Herstellen der Titan-Komponente des Polymerisationskatalysators

(1) In der ersten Stufe werden

(1.1) 100 Gewichtsteile Magnesiumäthylat, $Mg(OC_2H_5)_2$, mit

(1.2) soviel Gewichtsteilen Benzotrichlorid wie sie einem Molverhältnis Alkoholat (1.1):Chlor in dem Benzotrichlorid (1.2) von 100:16,7 entsprechen

in einer Kugelschwingmühle unter einer Mahlbeschleunigung von 50 m × $sec^{-2}$ über einer Zeitspanne von 30 Stunden bei einer Temperatur von –20 °C in Abwesenheit von Verdünnungsmitteln miteinander vermahlen.

(2) In der zweiten Stufe werden

(2.1) 100 Gewichtsteile des aus Stufe (1) resultierenden Stoffes mit

(2.2) 750 Gewichtsteilen Titantetrachlorid

zusammengebracht und das Ganze unter ständigem Rühren 1 Stunde auf einer Temperatur im Bereich von 80 bis 85 °C gehalten. Danach wird der resultierende Feststoff durch Filtration und Nachwaschen mit n-Heptan isoliert, wobei das Nachwaschen solange erfolgt, bis sich im Filtrat kein Titanttetrachlorid mehr nachweisen lässt.

(3) In der dritten Stufe werden

(3.1) 100 Gewichtsteile des aus Stufe (2) resultierenden Feststoffes erneut mit

(3.2) 750 Gewichtsteilen Titantetrachlorid

zusammengebracht und das Ganze unter ständigem Rühren 1 Stunde auf einer Temperatur im Bereich von 128 bis 132 °C gehalten. Danach wird der resultierende Feststoff durch Filtration und Nachwaschen mit n-Heptan isoliert, wobei das Nachwaschen solange erfolgt, bis sich im Filtrat kein Titantetrachlorid mehr nachweisen lässt.

Auf diese Weise wird eine Titankomponente erhalten, die einen Titangehalt von etwa 6 Gewichtsprozent, einen Chlorgehalt von etwa 60 Gewichtsprozent sowie einen Magnesiumgehalt von etwa 20 Gewichtsprozent aufweist.

B) Polymerisation mittels der Titan-Komponente

Ein Rührgefäss wird mit 500 ml n-Heptan, 0,4 g der Titan-Komponente, 10 mMol Aluminiumtriäthyl sowie 2 mMol Anissäureäthylester (als Promotor) beschickt.

Die eigentliche Polymerisation wird unter ständigem Rühren bei 60 °C während 3 Stunden durchgeführt mit Propylen als Monomer, dessen Druck während der Polymerisation konstant auf 1 bar gehalten wird.

Das Polymerisat wird hierbei mit einer Ergiebigkeit von 366 g Polypropylen pro g Titankomponente erhalten; es weist 10,3% in siedendem n-Heptan lösliche Anteile auf.

Beispiel 2

A) Herstellen der Titan-Komponente des Polymerisationskatalysators

(1) In der ersten Stufe werden

(1.1) 100 Gewichtsteile Magnesiumäthylat, $Mg(OC_2H_5)_2$, mit

(1.2) soviel Gewichtsteilen Benzalchlorid wie sie einem Molverhältnis Alkoholat (1.1):Chlor in dem Benzalchlorid (1.2) von 100:16,7 entsprechen in einer Kugelschwingmühle unter einer Mahlbeschleunigung von 50 m × $sec^{-2}$ über eine Zeitspanne von 30 Stunden bei einer Temperatur von –20 °C in Abwesenheit von Verdünnungsmitteln miteinander vermahlen.

(2) In der zweiten Stufe werden

(2.1) 100 Gewichtsteile des aus Stufe (1) resultierenden Stoffes mit

(2.2) 600 Gewichtsteilen Titantetrachlorid

zusammengebracht und das Ganze unter ständigem Rühren 1 Stunde auf einer Temperatur im Bereich von 75 bis 80 °C gehalten. Danach wird der resultierende Feststoff durch Filtration und Nachwaschen mit n-Heptan isoliert, wobei das Nachwaschen solange erfolgt, bis sich im Filtrat kein Titantetrachlorid mehr nachweisen lässt.

(3) In der dritten Stufe werden

(3.1) 100 Gewichtsteile des aus Stufe (2) resultierenden Feststoffes erneut mit

(3.2) 600 Gewichtsteilen Titantetrachlorid

zusammengebracht und das Ganze unter ständigem Rühren 1 Stunde auf einer Temperatur im Bereich von 128 bis 132 °C gehalten. Danach wird der resultierende Feststoff durch Filtration und Nachwaschen mit n-Heptan isoliert, wobei das Nachwaschen solange erfolgt, bis sich im Filtrat kein Titantetrachlorid mehr nachweisen lässt.

Auf diese Weise wird eine Titan-Komponente erhalten die einen Titangehalt von etwa 5 Gewichtsprozent, einen Chlorgehalt von etwa 58 Gewichtsprozent sowie einen Magnesiumgehalt von etwa 20 Gewichtsprozent aufweist.

B) Polymerisation mittels der Titan-Komponente

Ein Rührgefäss wird mit 500 ml n-Heptan, 0,4 g der Titan-Komponente, 10 mMol Aluminiumtriäthyl sowie 2 mMol Anissäureäthylester (als Promotor) beschickt.

Die eigentliche Polymerisation wird unter ständigem Rühren bei 60 °C während 3 Stunden durchgeführt mit Propylen als Monomer, dessen Druck während der Polymerisation konstant auf 1 bar gehalten wird.

Das Polymerisat wird hierbei mit einer Ergiebigkeit von 295 g Polypropylen pro g Titan-Komponente erhalten; es weist 19,3% in siedendem n-Heptan lösliche Anteile auf.

**Patentanspruch**

Verfahren zum Herstellen einer Titan-Komponente für Polymerisationskatalysatoren des Ziegler-Natta-Typs, dadurch gekennzeichnet, dass man zunächst

(1) in einer ersten Stufe

(1.1) 100 Gewichtsteile eines Alkoholats der allgemeinen Formel $Mg(OR)_2$, worin R steht für eine 1 bis 6 Kohlenstoffatome aufweisende Alkylgruppe; mit

(1.2) soviel Gewichtsteilen eines Chlortoluols der Formel

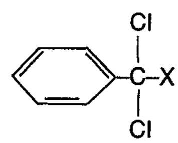

,

worin X steht für Chlor oder Wasserstoff, wie sie einem Molverhältnis Alkoholat (1.1):Chlor in dem Chlortoluol (1.2) von 100:1 bis 100:100 entsprechen;

in einer Kugelschwingmühle unter einer Mahlbeschleunigung von 30 bis 80 m × $sec^{-2}$ über eine Zeitspanne von 5 bis 100 Stunden bei einer Temperatur von –50 bis +10 °C in Abwesenheit von Verdünnungsmitteln miteinander vermahlt; dann

(2) in einer zweiten Stufe

(2.1) 100 Gewichtsteile des aus Stufe (1) resultierenden Stoffes mit

(2.2) 300 bis 1800 Gewichtsteilen Titantetrachlorid

zusammenbringt, das Ganze unter ständiger Durchmischung 0,1 bis 5 Stunden auf einer Temperatur im Bereich von 40 bis 180 °C hält und den dabei resultierenden Feststoff unter Abtrennung überschüssigen Titantetrachlorids isoliert, und schliesslich

(3) in einer dritten Stufe

(3.1) 100 Gewichtsteile des aus Stufe (2) resultierenden Feststoffes erneut mit

(3.2) 300 bis 1800 Gewichtsteilen Titantetrachlorid

zusammenbringt, das Ganze unter ständiger Durchmischung 0,1 bis 5 Stunden auf einer Temperatur im Bereich von 40 bis 180 °C hält und den dabei resultierenden Feststoff unter Abtrennung überschüssigen Titantetrachlorids isoliert.

**Claim**

A process for the preparation of a titanium component for polymerization catalysts of the Ziegler-Natta type, characterized in that

(1) in a first stage

(1.1) 100 parts by weight of an alcoholate of the general formula $Mg(OR)_2$, where R is alkyl of 1 to 6 carbon atoms, are milled with

(1.2) the appropriate number of parts by weight of a chlorotoluene of the formula

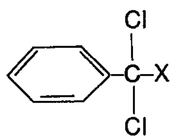
,

where X is chlorine or hydrogen, to correspond to a molar ratio of alcoholate (1.1) to chlorine in the chlorotoluene (1.2) of from 100:1 to 100:100 in a vibratory ball mill under a milling acceleration of from 30 to 80 m × $sec^{-2}$ for a period of from 5 to 100 hours at from –50 to +10 °C in the absence of a diluent, thereafter

(2) in a second stage

(2.1) 100 parts by weight of the material resulting from stage (1) and

(2.2) from 300 to 1800 parts by weight of titanium tetrachloride

are brought together, the batch is kept for from 0,1 to 5 hours at from 40 to 180 °C, with constant mixing, and the resulting solid is isolated, excess titanium tetrachloride being separated off, and finally

(3) in a third stage

(3.1) 100 parts by weight of the solid resulting from stage (2) are again brought together with

(3.2) from 300 to 1800 parts by weight of titanium tetrachloride,

the batch is kept for from 0,1 to 5 hours at from 40 to 180 °C, with constant mixing, and the resulting solid is isolated, excess titanium tetrachloride being separated off.

**Revendication**

Procédé de préparation d'un composant au titane pour les catalyseurs de polymérisation du type Ziegler-Natta, caractérisé en ce que, d'abord

(1) dans un premier stade, on broie ensemble

(1.1) 100 parties en poids d'un alcoolate de formule générale $Mg(OR)_2$ dans laquelle R représente un group alkyle contenant de 1 à 6 atomes de carbone, avec

(1.2) un chlorotoluène de formule

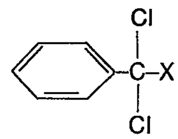
,

dans laquelle X représente le chlore ou l'hydrogène, en quantité en poids correspondant à un rapport molaire alcoolate (1.1):chlore du chlorotoluène (1.2) de 100:1 à 100:100,
dans un broyeur oscillant à boulets avec une accélération de broyage de 30 à 80 m × $s^{-2}$ pendant une durée de 5 à 100 heures à une température allant de –50 à +10 °C en l'absence de diluants puis

(2) dans un deuxième stade, on mélange

(2.1) 100 parties en poids de la substance obtenue au stade (1) avec

(2.2) 300 à 1800 parties en poids de tétrachlorure de titane,

on maintient le tout sous agitation constante pendant 0,1 à 5 heures à une température dans l'intervalle de 40 à 180 °C et on isole la substance solide formée en séparant l'excès de tétrachlore de titane, et finalement

(3) dans un troisième stade, on mélange

(3.1) 100 parties en poids de la substance solide obtenue au stade (2) avec

(3.2) 300 à 1800 parties en poids de tétrachlorure de titane,

on maintient le tout sous agitation constante pendant 0,1 à 5 heures à une température dans l'intervalle de 40 à 180 °C et on isole la substance solide formée en séparant l'excès de tétrachlorure de titane.